# EUROPÄISCHE PATENTSCHRIFT

(11) **EP 1 132 529 B1**
(45) Veröffentlichungstag und Bekanntmachung des Hinweises auf die Patenterteilung: **21.04.2004**
(21) Anmeldenummer: 01101993.2
(22) Anmeldetag: 30.01.2001
(51) Int. Cl.: E03C 1/04, E03C 1/05, F16K 31/60

(54) **Wasserauslassarmatur**
Water outlet fitting
Robinetterie d'écoulement d'eau

(30) Priorität: 09.02.2000 DE 10005971
(43) Veröffentlichungstag der Anmeldung: 12.09.2001
(73) Patentinhaber: Grohe Water Technology AG & Co. KG, 58675 Hemer (DE)
(72) Erfinder: Philipps-Liebich, Hartwig, 58675 Hemer (DE); Dürfeld, Peter, 58710 Menden (DE); Fitting, Jürgen, 58640 Iserlohn (DE); Kraft, Eckhard, 58706 Menden (DE)

(56) Entgegenhaltungen:
- EP-A- 0 666 482
- DE-A- 4 340 713
- US-A- 4 688 277
- US-A- 5 358 213
- US-A- 6 003 170

## Beschreibung

Die Erfindung bezieht sich auf eine Wasserauslassarmatur, insbesondere für den Sanitärbereich, mit einem Armaturenkörper und einem ersten, mit einem Handgriff in zwei Freiheitsgraden stellbaren Ventil, mit dem im ersten Freiheitsgrad die Durchflussmenge pro Zeiteinheit und in einem zweiten Freiheitsgrad das Mischungsverhältnis des zufließenden Kalt- und Warmwassers bestimmbar ist, sowie wenigstens einem zweiten, von einer Steuerelektronik stellbaren Ventil, wobei die beiden Ventile hintereinander angeordnet sind und die Steuerelektronik mit einer, wenigstens einen Sensor aufweisenden Detektionseinrichtung zur berührungslosen Steuerung und mit einem mit dem Handgriff im ersten Freiheitsgrad betätigbaren Schalter verbunden ist.

Eine Wasserauslassarmatur dieser Gattung ist aus der deutschen Offenlegungsschrift 197 23 312 A1 bekannt. Bei dieser vorbekannten Einrichtung erfolgt die Steuerung des Wasserauslaufs, nachdem der Betätigungsgriff in Offenstellung gebracht und nicht mehr vom Benutzer berührt wird, von der Detektionseinrichtung.

Der Erfindung liegt die Aufgabe zugrunde, die Wasserauslassarmatur so auszubilden, dass die berührungslose Auslaufsteuerung in einem von der manuellen Auslaufsteuerung getrennten Bereich einstellbar ist und ein Verfahren zur Steuerung der Armatur vorzuschlagen.

Diese Aufgabe wird durch eine Wasserauslaufarmatur mit den Merkmalen des Anspruchs 1 und durch ein Verfahren mit den Merkmalen des Anspruchs 11 gelöst.
Weitere Ausgestaltungen der Erfindung sind in den Ansprüchen 2 bis 10 angegeben.

Mit den erfindungsgemäßen Maßnahmen wird erreicht, dass mit dem Handgriff bzw. dem Bedienhebel des mechanischen Ventils, einem so genannten Eingriffmischventil, folgende Funktionszustände der Armatur einstellbar sind:
- Bedienhebel befindet sich "ganz unten". Armatur ist nicht in Betrieb.
- Bedienhebel befindet sich "fast ganz unten" in einer "eingerasteten" Position. Armatur ist in Betrieb. Sie befindet sich in einer "standby" Position und ist zur "berührungslosen" Wasserabgabe bereit.
- Bedienhebel befindet sich in der Position zwischen "eingerastet" und "ganz oben". Armatur gibt in dieser Position fortlaufend Wasser ab, während die Detektionseinrichtung (Infrarotelektronik) inaktiv ist. Die Menge und die Temperatur des Volumenstroms ist von der manuell gewählten Position des Bedienhebels durch den Verwender in der aktuellen Zapfsituation abhängig.

Die Bedienmodalität der Wasserauslassarmatur ist somit einem gewöhnlichen Eingriffmischventil (Einhebelmischer) vergleichbar. Die Menge pro Zeiteinheit des Wasserdurchflusses ist hierbei von der vertikalen Stellung des Bedienhebels abhängig, während die Wassertemperatur von der horizontalen Position bzw. Drehstellung des Bedienhebels abhängig ist.

Die erfindungsgemäße Wasserauslassarmatur eignet sich somit gleichermaßen für den berührungslos gesteuerten Wasserauslaß als auch zum Befüllen von Waschbecken oder sonstigen Behältern ohne dass ein Berühren der Armatur durch den Benutzer oder das Einbringen eines Gegenstands in den Erfassungsbereich der Detektionseinrichtung erforderlich ist.

Ein Ausführungsbeispiel der Erfindung ist in der Zeichnung dargestellt und wird im folgenden näher beschrieben. Es zeigt
- Fig. 1: eine Wasserauslassarmatur in Form eines Eingriffmischventils in schematischer Darstellung im Längsschnitt, an einem Waschtisch installiert;

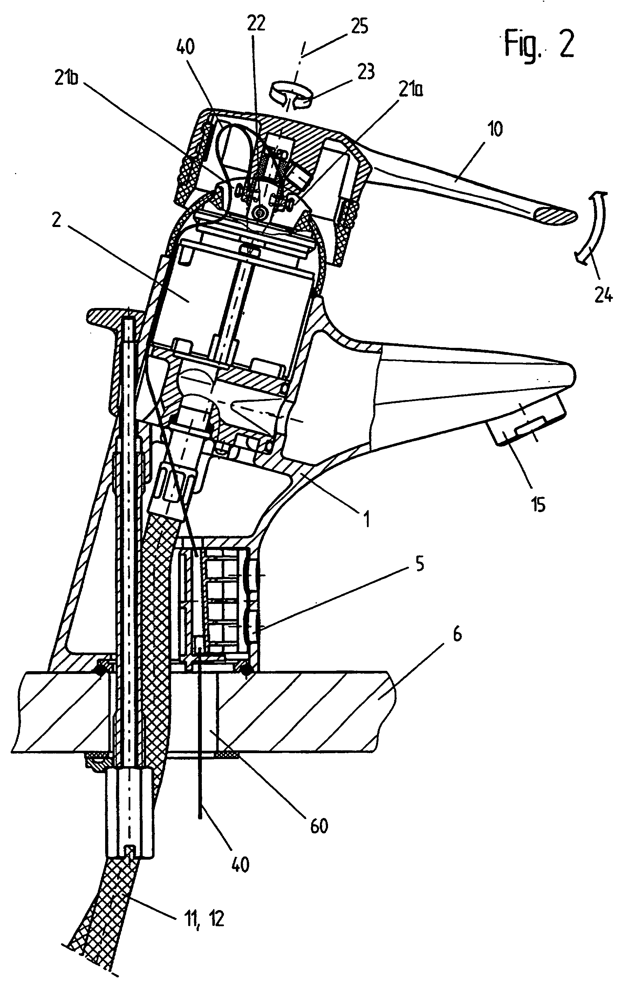

- Fig. 2: den in Fig. 1 gezeigten oberen Teil der Wasserauslassarmatur in vergrößerter Darstellung;
- Fig. 3: den in Fig. 1 gezeigten Hebelkopf der in Fig. 1 gezeigten Wasserauslassarmatur in vergrößerter Darstellung in Absperrstellung;
- Fig. 4: den in Fig. 3 gezeigten Hebelkopf in der Schnittebene IV;
- Fig. 4a: die Schaltstellung des in Fig. 4 gezeigten Schalters;
- Fig. 5: den in Fig. 3 gezeigten Hebelkopf in einer mittleren Schwenkstellung in der Rastposition;
- Fig. 6: den in Fig. 5 gezeigten Hebelkopf in der Schnittebene VI;
- Fig. 6a: die Schaltstellung des in Fig. 6 gezeigten Schalters;
- Fig. 7: den in Fig. 5 gezeigten Hebelkopf in voll aufgeschwenkter Stellung;
- Fig. 8: den in Fig. 7 gezeigten Hebelkopf in der Schnittebene VIII;
- Fig. 8a: die Schaltstellung des in Fig. 8 gezeigten Schalters.

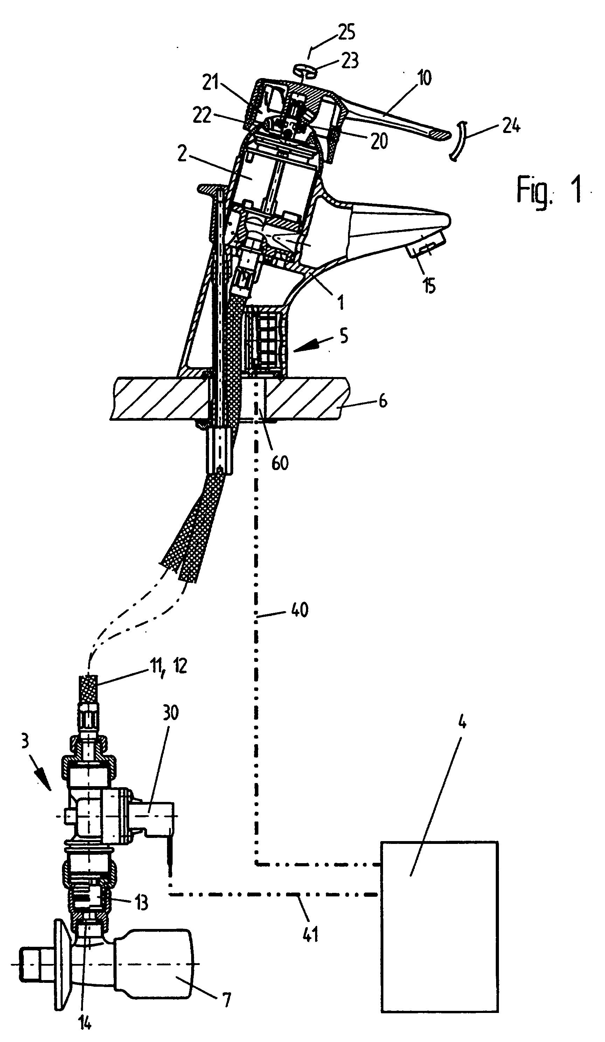

In Fig. 1 ist ein Armaturenkörper 1 gezeigt, der an einem zum Teil dargestellten Waschtisch 6 im Bereich einer Öffnung 60 in herkömmlicher Weise befestigt ist. Durch die Öffnung 60 sind ausserdem Zuflussleitungen 11,12 für das Kalt- und Warmwasser sowie eine Leitung 40 für eine unterhalb des Waschtisches 6 angeordneten, mit einem Mikroprozessor versehenen Steuerelektronik 4 hindurchgeführt. In dem Armaturenkörper 1 ist ausserdem eine bekannte Detektionseinrichtung 5 vorgesehen, die mit ausgesandten Infrarotstrahlen Gegenstände in einem bestimmten Erfassungsbereich ermittelt.

Die beiden Zuflussleitungen 11,12 münden in einem ersten Ventil 2, welches als Eingriffmischventil ausgebildet ist. An einem aus dem ersten Ventil 2 stirnseitig herausgeführten Stellhebel 20 ist ein Handgriff 10 befestigt. Der Stellhebel 20 des Ventils 2 ist dabei in zwei Freiheitsgraden bewegbar. Im ersten Freiheitsgrad wird der Stellhebel 20 um eine senkrecht zur Mittelachse 25 liegende Schwenkachse mit dem Handgriff auf- und abbewegt entsprechend dem Pfeil 24. Im zweiten Freiheitsgrad wird der Stellhebel 20 um die Mittelachse 25 entsprechend dem Pfeil 23 mit dem Handgriff 10 gedreht. Im ersten Freiheitsgrad wird die gesamte Durchflussmenge, in dem zweiten Freiheitsgrad das Mischungsverhältnis des zufließenden Kalt- und Warmwassers eingestellt, wobei das in dem ersten Ventil 2 erzeugte Mischwasser über ein Wasserauslassmundstück 15 als Freistrahl von dem Armaturenkörper 1 abgegeben wird.

Die Zuflussleitungen 11,12 sind separat über jeweils ein zweites Ventil 3 an jeweils einem Eckventil 7 des entsprechenden Kaltwasser- oder Warmwasserversorgungsleitungsnetzes verbunden. In der Zeichnung ist ein Eckventil 7 gezeigt, das zweite Eckventil befindet sich hinter der Zeichnungsebene. Die beiden zweiten Ventile 3 können zweckmäßig als Zwillingsventil ausgebildet werden, die mit einem Pilotventil 30 synchron gesteuert werden. Das Pilotventil 30 ist elektromagnetisch betätigbar und über eine elektrische Leitung 41 mit der Steuerelektronik 4 verbunden. Stromaufwärts zwischen den Eckventilen 7 und den Ventilen 3 ist jeweils ein Rückflussverhinderer 13 und ein Schmutzfangsieb 14 angeordnet.

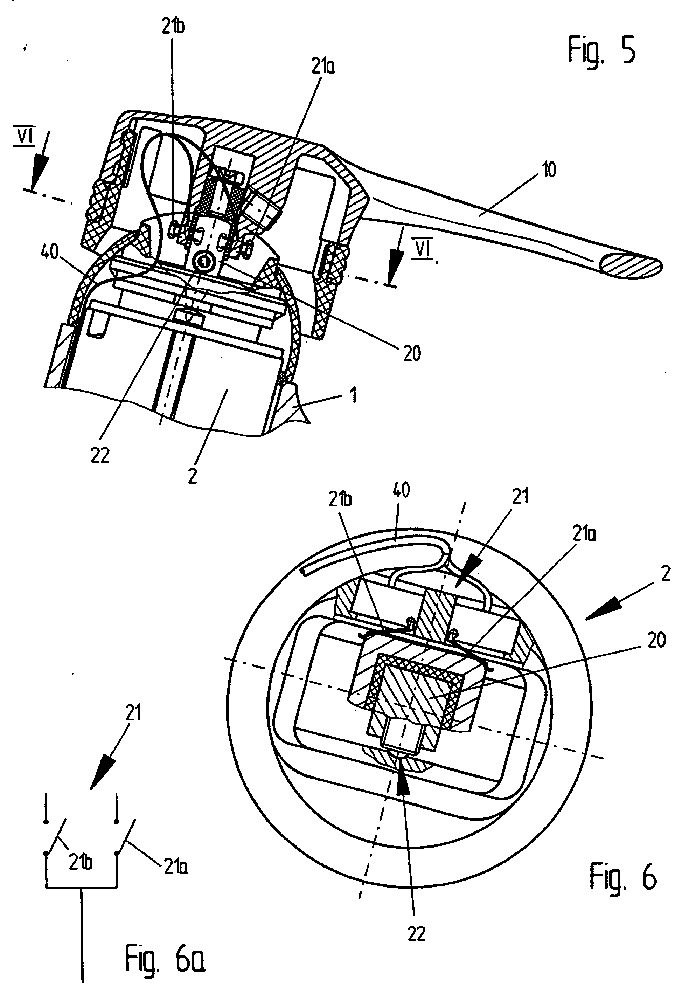

Im Bereich des Stellhebels 20 ist an dem ersten Ventil 2 ein Schalter 21 mit einem ersten Schaltelement 21a und einem zweiten Schaltelement 21b angeordnet. Die beiden Schaltelemente 21a und 21b sind über eine elektrische Leitung 40 mit der Steuerelektronik 4 ebenfalls verbunden.
Ausserdem ist der Stellhebel 20 im ersten Freiheitsgrad in einem bestimmten Schwenkbereich mit einer überwindbaren Verrastung 22 ausgebildet, wie es insbesondere aus Fig. 6 der Zeichnung zu entnehmen ist.

Die elektrische Energieversorgung der Steuerelektronik 4, des Pilotventils 30 sowie der Detektionseinrichtung 5 kann von einer in der Steuerelektronik 4 integrierten Batterie oder auch über einen Netzanschluss oder dergleichen erfolgen.

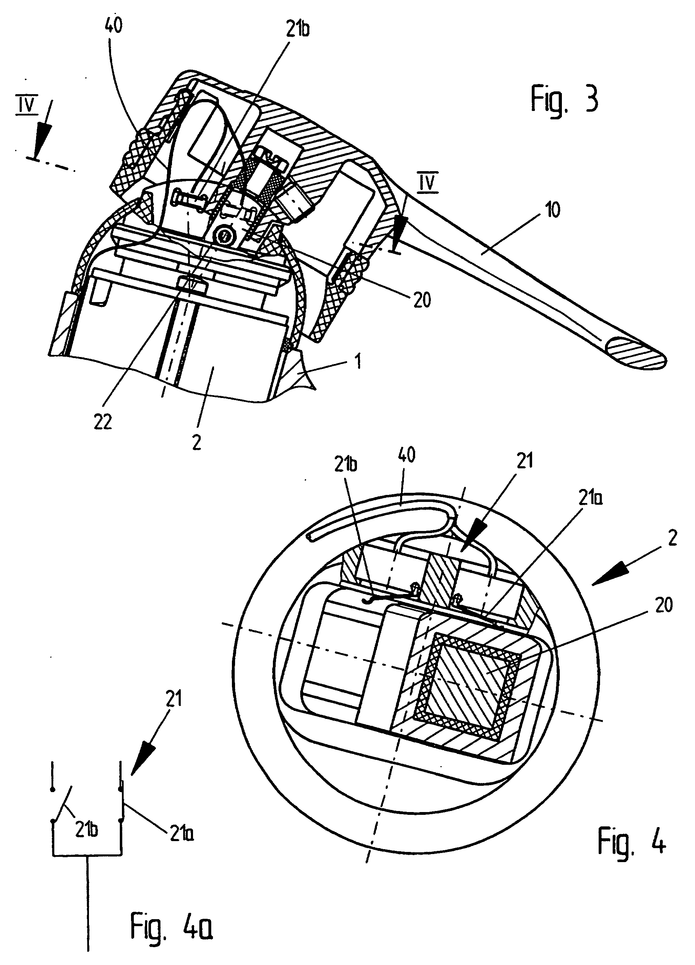

Der Schalter 21 ist am Ventil 2 so angeordnet, dass in der Absperrstellung des Ventils 2, wie es in Fig. 3 und 4 dargestellt ist, das erste Schaltelement 21a geschlossen und das zweite Schaltelement 21b geöffnet ist. Ein diesbezügliches Schaltbild ist in Fig. 4a dargestellt. In dieser Stellung des Schalters 21 ist die Detektionseinrichtung 5 inaktiv und die Ventile 3 sind geschlossen.
Wird nun mit dem Handgriff 10 das Ventil 2 im ersten Freiheitsgrad in die Offenposition gebracht, so erfolgt im Bereich der Verrastung 22 auch die Öffnung des Schaltelements 21a, so dass nunmehr beide Schaltelemente 21a,21b geöffnet sind, wie es aus Fig. 5 und 6, und insbesondere 6a, zu entnehmen ist. In dieser Stellung des Schalters 21 wird die Detektionseinrichtung 5 von der Steuerelektronik 4 aktiviert. Das Einrasten des Hebels in diesem Schwenkbereich im ersten Freiheitsgrad ist durch ein federndes Druckstück realisiert, wie es in Fig. 6 der Zeichnung ersichtlich ist.
Der Wasserauslauf wird in dieser Schwenkposition des Handgriffs 10 allein von der Detektionseinrichtung 5 gesteuert, d. h., sobald ein Gegenstand, z. B. die Hand eines Benutzers, in den Erfassungsbereich der Detektionseinrichtung 5 gelangt, wird dieses von der Detektionseinrichtung 5 erfasst und ein entsprechendes Signal an die Steuerelektronik 4 abgegeben. Die Steuerelektronik 4 veranlasst nunmehr über das Pilotventil 30 die Öffnung der beiden Ventile 3, so dass Wasser aus dem Auslaufmundstück 15 austritt. Sobald der von der Detektionseinrichtung 5 erfasste Gegenstand aus dem Erfassungsbereich entfernt wird, wird dieses wiederum von der Detektionseinrichtung 5 über ein Signal der Steuerelektronik 4 gemeldet, so dass hierauf von der Steuerelektronik 4 die beiden Ventile 3 abgesperrt werden und der Wasserauslass aus dem Wasserauslassmundstück 15 unterbrochen wird. Hierbei wird jedoch ein dauernder Wasserauslauf, der z. B. bei einer ständigen Anwesenheitsdetektion im Erfassungsbereich auftreten kann, nach einem Ablauf einer maximalen Laufzeit abgebrochen.

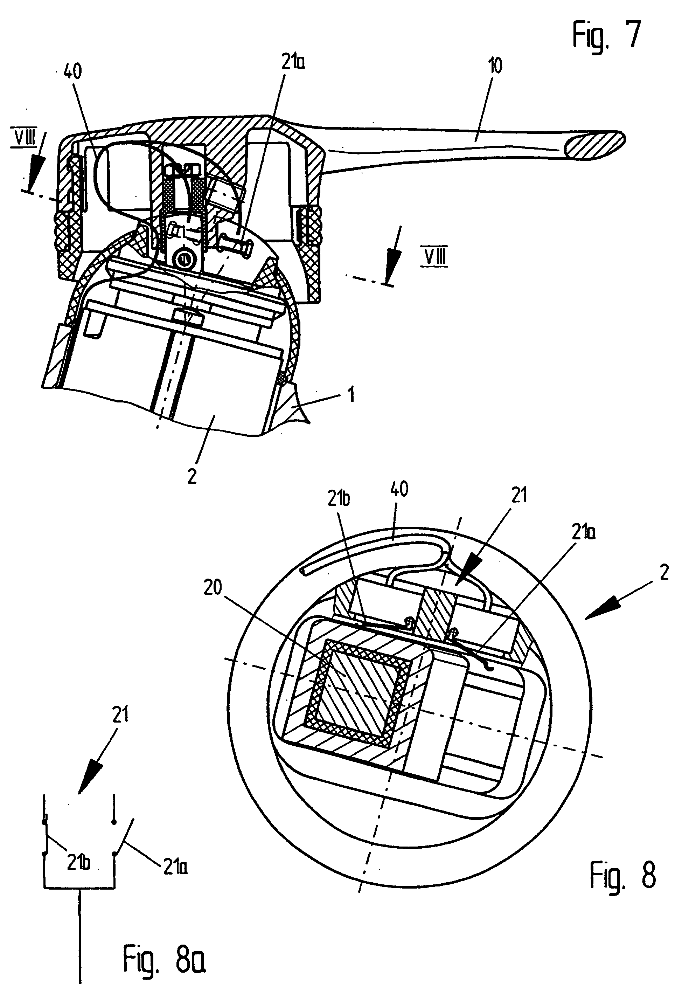

Wird der Stellhebel 20 mit dem Handgriff 10 vom Benutzer von seiner Verrastung 22 weiter in die Öffnungsposition gebracht, so gelangt das Schaltelement 21b in die Schließposition, während das Schaltelement 21a in der Öffnungsstellung verharrt, wie es aus Fig. 7 und 8, insbesondere Fig. 8a, zu entnehmen ist. Mit dieser Stellung des Schalters 21 wird die Steuerelektronik 4 so geschaltet, dass einerseits die Detektionseinrichtung 5 inaktiviert wird und andererseits die Ventile 3 geöffnet werden. In diesem Einstellbereich wird somit der Wasserausfluss allein von dem ersten Ventil 2 bestimmt, d. h., die Wasserauslaufarmatur hat die Funktion eines konventionellen mechanischen Einhebelmischers.

Der Schalter 21 ist hierbei so ausgelegt, dass von der Absperrstellung beginnend mit einem Schwenkwinkel von 0° bis ca. 2° vor der Verrastung 22 die Detektionseinrichtung 5 inaktiv ist und die Ventile 3 geschlossen sind, während nach der Verrastung 22 ab einem weiteren Schwenkwinkel von etwa 2° die Detektionseinrichtung 5 inaktiv ist und die Ventile 3 geöffnet sind.

Bei dem vorstehend beschriebenen Ausführungsbeispiel ist das von der Steuerelektronik 4 stellbare Ventil 3 stromaufwärts vor dem von Hand stellbaren Ventil 2 als Zwillingsventil für das zufließende Kalt- und Warmwasser angeordnet. Selbstverständlich kann das von der Steuerelektronik stellbare Ventil auch stromabwärts hinter dem von Hand stellbaren Ventil in der Mischwasserleitung angeordnet werden. Auch kann die Steuerelektronik direkt im Armaturenkörper angeordnet werden.

## Patentansprüche

1. Wasserauslassarmatur, insbesondere für den Sanitärbereich, mit einem Armaturenkörper (1) und einem ersten, mit einem Handgriff (10) in zwei Freiheitsgraden stellbaren Ventil (2), mit dem im ersten Freiheitsgrad die Durchflussmenge pro Zeiteinheit und im zweiten Freiheitsgrad das Mischungsverhältnis des zufließenden Kalt- und Warmwassers bestimmbar ist, sowie wenigstens einem zweiten, von einer Steuerelektronik (4) stellbaren Ventil (3), wobei die beiden Ventile (2,3) hintereinander angeordnet sind und die Steuerelektronik (4) mit einer, wenigstens einen Sensor aufweisenden Detektionseinrichtung (5) zur berührungslosen Steuerung und mit einem mit dem Handgriff (10) im ersten Freiheitsgrad betätigbaren Schalter (21) verbunden ist, wobei der Schalter (21) von einem den Handgriff (10) tragenden Stellhebel (20) betätigbar ist, und von dem Schalter (21) in einem bestimmten Öffnungsbereich des ersten Ventils (2) die Steuerelektronik (4) so schaltbar ist, dass in diesem Bereich der Wasserausfluss von der Detektionseinrichtung (5) steuerbar ist, **dadurch gekennzeichnet, dass** der Schalter (21) am stationären Teil des ersten Ventils (2) angeordnet ist.

2. Wasserauslassarmatur nach Anspruch 1, **dadurch gekennzeichnet, dass** der Schalter (21) ein erstes Schaltelement (21a) und ein zweites Schaltelement (21b) aufweist, wobei mit den beiden Schaltelementen (21a,21b) unterschiedliche Signale für die Steuerelektronik (4) erzeugbar sind.

3. Wasserauslassarmatur nach Anspruch 1 oder 2, **dadurch gekennzeichnet, dass** der Stellhebel (20) in einem bestimmten Öffnungsbereich des ersten Ventils (2) von einer überwindbaren Verrastung (22) aufgenommen ist, in der der Wasserausfluss von der Detektionseinrichtung (5) gesteuert ist.

4. Wasserauslassarmatur nach Anspruch 3, **dadurch gekennzeichnet, dass** die überwindbare Verrastung (22) des Stellhebels (20) bei einer Wasserausflussleistung von etwa 5 bis 7 l/min, vorzugsweise 6 l/min vorgesehen ist.

5. Wasserauslassarmatur nach Anspruch 3 oder 4, **dadurch gekennzeichnet, dass** in dem vergrößerten Öffnungsbereich jenseits der überwindbaren Verrastung (22) der Wasserausfluss von dem ersten Ventil (2) bestimmt ist.

6. Wasserauslassarmatur nach wenigstens einem der Ansprüche 1 bis 5, **dadurch gekennzeichnet, dass** das von der Steuerelektronik (4) stellbare Ventil (3) als Zwillingsventil in der Zuflussleitung (11,12) für Kalt- und Warmwasser angeordnet und von einem elektromagnetisch betätigbaren Pilotventil (30) schaltbar ist.

7. Wasserauslassarmatur nach Anspruch 6, **dadurch gekennzeichnet, dass** stromaufwärts vor dem Ventil (3) in der Zuflussleitung (11,12) jeweils ein Rückflussverhinderer (13) und/oder ein Schmutzfangsieb (14) angeordnet ist.

8. Wasserauslassarmatur nach wenigstens einem der Ansprüche 2 bis 7, **dadurch gekennzeichnet, dass** in der Absperrposition des ersten Ventils (2) das erste Schaltelement (21a) geschlossen und das zweite Schaltelement (21b) geöffnet ist, in dem bestimmten Öffnungsbereich sowohl das erste Schaltelement (21a) als auch das zweite Schaltelement (21b) geöffnet ist, während nach dem bestimmten Öffnungsbereich das zweite Schaltelement (21b) geschlossen und das erste Schaltelement (21a) geöffnet ist.

9. Wasserauslassarmatur nach wenigstens einem der Ansprüche 1 bis 8, **dadurch gekennzeichnet, dass** das von der Steuerelektronik (4) gesteuerte Ventil (3) beim Öffnungsvorgang des ersten Ventils (2) so lange geschlossen ist, bis von dem Stellhebel (20) der bestimmte Bereich, etwa die überwindbare Verrastung (22), erreicht ist.

10. Wasserauslassarmatur nach wenigstens einem der Ansprüche 3 bis 9, **dadurch gekennzeichnet, dass** beide Schaltelemente (21a,21b) während eines Bogenwinkels von etwa 2° vor und nach der Verrastung (22) geöffnet sind, so dass der Wasserausfluss in diesem Öffnungsbereich von der Detektionseinrichtung (5) gesteuert ist.

11. Verfahren zur Steuerung des Wasseraustritts aus einer Wasserauslassarmatur gemäß Ansprüche 1 bis 10 zur Mischung von Kalt- und Warmwasser und Dosierung der Ausflussmenge pro Zeiteinheit, wobei ausserdem der Wasserausfluss von einer mit einem Sensor versehenen Detektionseinrichtung über eine Steuerelektronik einund ausschaltbar ist, **gekennzeichnet durch** die Verfahrensschritte:
a) Bei der Betätigung des Handgriffs (10) wird bei der Öffnungsbewegung im Anfangsbereich und bei der Schließbewegung im Endbereich der Wasserausfluss von dem von der Steuerelektronik (4) gesteuerten Ventil (3) abgesperrt.
b) In einem mittleren bestimmbaren Öffnungsbereich des Ventils (2) wird die Detektionseinrichtung (5) aktiviert und der Wasserausfluss von der Detektionseinrichtung (5) über die Steuerelektronik (4) und dem Ventil (3) gesteuert.
c) In einem weiteren Öffnungsbereich hinter dem bestimmten Öffnungsbereich wird von der Steuerelektronik (4) unabhängig von der Detektionseinrichtung (5) das Ventil (3) in Offenstellung gehalten, so dass der Wasserausfluss von dem Ventil (2) gesteuert ist.

## Claims

1. Water discharge fitting, especially for the field of sanitary engineering, having a fitting body (1) and a first valve (2) adjustable in two degrees of freedom by means of a handle (10), with which valve in the first degree of freedom the amount flowing through per unit of time is determinable and in the second degree of freedom the mixture ratio of the inflowing cold and hot water is determinable, and having at least a second valve (3) adjustable by control electronics (4), the two valves (2, 30) being arranged in series and the control electronics (4) being connected with a detection device (5) having at least one sensor for contactless control and with a switch (21) operable with the handle (10) in the first degree of freedom, the switch (21) being operable by means of a control lever (20) carrying the handle (10), and the control electronics (4) being switchable by the switch (21) in a specific opening range of the first valve (2) so that in that range the water outflow is controllable by the detection device (5), **characterised in that** the switch (21) is arranged on the stationary part of the first valve (2).

2. Water discharge fitting according to claim 1, **characterised in that** the switch (21) comprises a first switching element (21a) and a second switching element (21b), different signals for the control electronics (4) being arranged to be produced by the two switching elements (21a, 21b).

3. Water discharge fitting according to claim 1 or 2, **characterised in that** in a specific opening range of the first valve (2) the control lever (20) is received by an overridable engagement means (22), the water outflow being controlled by the detection device (5).

4. Water discharge fitting according to claim 3, **characterised in that** the overridable engagement means (22) of the control lever (20) is provided at a water discharge capacity of about 5 to 7 l/min, preferably 6 l/min.

5. Water discharge fitting according to claim 3 or 4, **characterised in that** in the extended opening range on the other side of the overridable engagement means (22) the water discharge is determined by the first valve (2).

6. Water discharge fitting according to at least one of claims 1 to 5, **characterised in that** the valve (3) adjustable by the control electronics (4) is arranged as a dual valve in the inlet pipe (11,12) for cold and hot water and is switchable by an electromagnetically operable pilot valve (30).

7. Water discharge fitting according to claim 6, **characterised in that** a respective non-return valve (13) and/or a dirt filter (14) are arranged upstream of the valve (3) in the inlet pipe (11,12).

8. Water discharge fitting according to at least one of claims 2 to 7, **characterised in that** in the shut-off position of the first valve (2) the first switching element (21a) is closed and the second switching element (21b) is open, in the specific opening range both the first switching element (21a) and the second switching element (21b) are open, whilst after the specific opening range the second switching element (21b) is closed and the first switching element (21a) is open.

9. Water discharge fitting according to at least one of claims 1 to 8, **characterised in that** the valve (3) controlled by the control electronics (4) is closed during the opening process of the first valve (2) until the specific range, for instance the overridable engagement means (22), is reached by the control lever (20).

10. Water discharge fitting according to at least one of claims 3 to 9, **characterised in that** both switching elements (21a, 21b) are open over an angle of arc of about 2° before and after the engagement means (22), so that water discharge in this opening range is controlled by the detection device (5).

11. Method for control of the water discharged from a water fitting according to claims 1 to 10, for mixing cold and hot water and controlling the amount flowing out per unit of time, wherein additionally the water discharge is arranged to be switched on and off by way of control electronics by a detection device provided with a sensor, **characterised by** the following method steps:
a) on operation of the handle (10), during the opening movement in the start range and during the closing movement in the end range, the water discharge is shut off by the valve (3) controlled by the control electronics (4),
b) in a middle, definable opening range of the valve (2), the detection device (5) is activated and the water discharge is controlled by the detection device (5) via the control electronics (4) and the valve (3),
c) in a further opening range after the specific opening range, the valve (3) is held in the open position by the control electronics (4) independently of the detection device (5), so that the water discharge is controlled by the valve (2).

## Revendications

1. Robinetterie d'écoulement d'eau, en particulier pour le domaine sanitaire, comportant un corps de robinetterie (1) et une première vanne (2) réglable selon deux degrés de liberté à l'aide d'une poignée (10), avec laquelle le premier degré de liberté permet de déterminer le débit par unité de temps et le deuxième degré de liberté permet de déterminer le dosage de l'eau froide et chaude qui s'écoule, et comportant également au moins une deuxième vanne (3) réglable à l'aide d'une électronique de commande (4), où les deux vannes (2, 3) sont disposées l'une derrière l'autre, et l'électronique de commande (4) est reliée à un dispositif de détection (5) présentant au moins un capteur pour la commande sans contact ainsi qu'à un commutateur (21) pouvant être actionné à l'aide de la poignée (10) dans le premier degré de liberté, où le commutateur (21) peut être actionné par un levier de commande (20) portant la poignée (10), et l'électronique de commande (4) peut être commandée par le commutateur (21) dans une zone d'ouverture déterminée de la première vanne (2) de telle sorte que dans cette zone, l'écoulement d'eau peut être commandé par le dispositif de détection (5),
**caractérisée en ce que**
le commutateur (21) est disposé au niveau de la partie fixe de la première vanne (2).

2. Robinetterie d'écoulement d'eau selon la revendication 1,
**caractérisée en ce que**
le commutateur (21) présente un premier élément de commutation (21a) et un deuxième élément de commutation (21b), des signaux différents pouvant être générés à l'aide des deux éléments de commutation (21a, 21b) pour l'électronique de commande (4).

3. Robinetterie d'écoulement d'eau selon la revendication 1 ou 2,
**caractérisée en ce que**
dans une zone d'ouverture déterminée de la première vanne (2), le levier de commande (20) est logé par un élément de blocage franchissable (22), dans lequel l'écoulement d'eau est commandé par le dispositif de détection (5).

4. Robinetterie d'écoulement d'eau selon la revendication 3,
**caractérisée en ce que**
l'élément de blocage franchissable (22) du levier de commande (20) est prévu pour un écoulement d'eau d'environ 5 à 7 1/min, de préférence 6 l/min.

5. Robinetterie d'écoulement d'eau selon la revendication 3 ou 4,
**caractérisée en ce que**
dans la zone d'ouverture agrandie au-delà de l'élément de blocage franchissable (22), l'écoulement d'eau est déterminé par la première vanne (2).

6. Robinetterie d'écoulement d'eau selon au moins l'une des revendications 1 à 5,
**caractérisée en ce que**
la vanne (3) réglable à l'aide de l'électronique de commande (4) est disposée en tant que vanne jumelle dans la conduite d'arrivée (11, 12) de l'eau froide et de l'eau chaude et peut être commutée par une vanne pilote (30) à actionnement électromagnétique.

7. Robinetterie d'écoulement d'eau selon la revendication 6,
**caractérisée en ce qu'**
un élément de non-retour (13) et/ou un tamis collecteur de saleté (14) sont respectivement disposés dans la conduite d'arrivée (11, 12), en amont de la vanne (3).

8. Robinetterie d'écoulement d'eau selon au moins l'une des revendications 2 à 7,
**caractérisée en ce que**
dans la position de fermeture de la première vanne (2), le premier élément de commutation (21a) est fermé et le deuxième élément de commutation (21b) est ouvert, dans la zone d'ouverture déterminée, à la fois le premier élément de commutation (21a) et le deuxième élément de commutation (21b) sont ouverts, tandis qu'après la zone d'ouverture déterminée, le deuxième élément de commutation (21b) est fermé et le premier élément de commutation (21a) est ouvert.

9. Robinetterie d'écoulement d'eau selon au moins l'une des revendications 1 à 8,
**caractérisée en ce que**
lors du processus d'ouverture de la première vanne (2), la vanne (3) commandée par l'électronique de commande (4) reste fermée jusqu'à ce que le levier de commande (20) atteigne la zone déterminée, environ au niveau de l'élément de blocage franchissable (22).

10. Robinetterie d'écoulement d'eau selon au moins l'une des revendications 3 à 9,
**caractérisée en ce que**
les deux éléments de commutation (21a, 21b) sont ouverts pendant un angle d'arc d'environ 2° avant et après l'élément de blocage (22), de telle sorte que dans cette zone d'ouverture, l'écoulement d'eau est commandé par le dispositif de détection (5).

11. Procédé de commande de l'écoulement d'eau provenant d'une robinetterie conforme aux revendications 1 à 10, permettant de mélanger l'eau froide et l'eau chaude et de doser le débit par unité de temps, où l'écoulement d'eau peut en outre être déclenché et coupé par un dispositif de détection pourvu d'un capteur, par le biais d'une électronique de commande;
**caractérisé par**
les étapes suivantes :
a) Lors de l'actionnement de la poignée (10), lors du mouvement d'ouverture dans la zone de début et lors du mouvement de fermeture dans la zone de fin, l'écoulement d'eau est bloqué par la vanne (3) commandée par l'électronique de commande (4).
b) Dans une zone d'ouverture médiane pouvant être déterminée de la vanne (3), le dispositif de détection (5) est activé et l'écoulement d'eau est commandé par le dispositif de détection (5), par le biais de l'électronique de commande (4), ainsi que par la vanne (3).
c) Dans une autre zone d'ouverture située après la zone d'ouverture déterminée, la vanne (3) est maintenue en position ouverte par l'électronique de commande (4) indépendamment du dispositif de détection (5), de telle sorte que l'écoulement d'eau est commandé par la vanne (2).
